(19) Europäisches Patentamt
European Patent Office
Office européen des brevets

(11) **EP 4 556 954 A1**

(12) **EUROPEAN PATENT APPLICATION**

(43) Date of publication:
**21.05.2025 Bulletin 2025/21**

(21) Application number: **23209610.7**

(22) Date of filing: **14.11.2023**

(51) International Patent Classification (IPC):
***G01S 13/90*** *(2006.01)*

(52) Cooperative Patent Classification (CPC):
**G01S 13/9043; G01S 7/2813; G01S 13/9017**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Imec VZW**
**3001 Leuven (BE)**
• **Vrije Universiteit Brussel**
**1050 Brussel (BE)**

(72) Inventors:
• **Al baba, Adnan**
**3010 Leuven (BE)**
• **Bourdoux, Andre**
**4910 Theux (BE)**

(74) Representative: **Patent Department IMEC**
**IMEC vzw**
**Patent Department**
**Kapeldreef 75**
**3001 Leuven (BE)**

(54) **A METHOD FOR SUPPRESSING SIDELOBES AND GHOST TARGETS IN SAR IMAGES AND A SYSTEM THEREOF**

(57) The present disclosure relates to a computer implemented method for providing a SAR image with attenuated sidelobes and ghost targets caused by grating lobes, left-right ambiguity observed across the radar's boresight, or a combination thereof. The present disclosure further relates to a computer program product, a computer readable storage medium comprising instructions for performing the computer implemented method, and a SAR imaging system programmed for carrying out the computer implemented method.

110

Obtaining radar images, $\gamma_{\hat{n}}(x,y)$, comprising range and cross-range information
**111**

Rotating the radar images to obtain rotated copies of the radar images, $\dot{\gamma}_{\hat{n}}(\dot{x},\dot{y})$
**112**

Deriving, for the obtained radar images, weight maps, $W_{\hat{n}}(x,y), \dot{W}_{\hat{n}}(\dot{x},\dot{y})$, by normalizing their range information with respect to the cross-range information and vice versa
**113**

Combining the radar images, where the combining takes into account the derived weight maps, to obtain a compensated radar image, $\tilde{\gamma}(x,y)$
**114**

**FIG.2B**

EP 4 556 954 A1

## Description

## Technical Field

The present disclosure relates to a computer implemented method for providing a SAR image with attenuated sidelobes and ghost targets caused by grating lobes, left-right ambiguity observed across the radar's boresight, or a combination thereof. The present disclosure further relates to a computer program product, a computer readable storage medium comprising instructions for performing the computer implemented method, and a SAR imaging system programmed for carrying out the computer implemented method.

## Background

Radar imaging for autonomous vehicles, such as field robotics, robot aircrafts, human-centred robotics, autonomous trolley vehicles, unmanned aerial vehicles, etc., requires not only high range, but also high Doppler and angular resolutions. While better range and Doppler resolution can be achieved with larger bandwidth and longer observation time, respectively, higher angular resolution is typically achieved with larger antenna apertures. Larger antenna apertures are however expensive or infeasible for such autonomous vehicles. To circumvent this problem, Synthetic Aperture Radar, SAR, is typically employed which exploits the motion of the platform on which the radar is mounted to form larger synthetic apertures by collecting reflections of the radar signal from the environment along the travel path of the radar. The radar image reconstructed from the collected reflections of the radar signal, will suffer from the presence of significant sidelobes which can obscure weaker targets or manifest themselves as targets in the reconstructed radar image. In addition, the phase trajectory of the targets cannot be approximated by a linear phase progression with larger synthetic apertures. Therefore, the phase curvature will result in sidelobes in the angular domain which cannot be removed by conventional approaches like windowing techniques.

The SAR can be further combined with Multiple Input and Multiple Output, MIMO, radar antenna topologies to create a virtual antenna array for an even larger virtual aperture size to further improve the angular resolution as well as the signal-to-noise, ratio, SNR, in the reconstructed radar image.

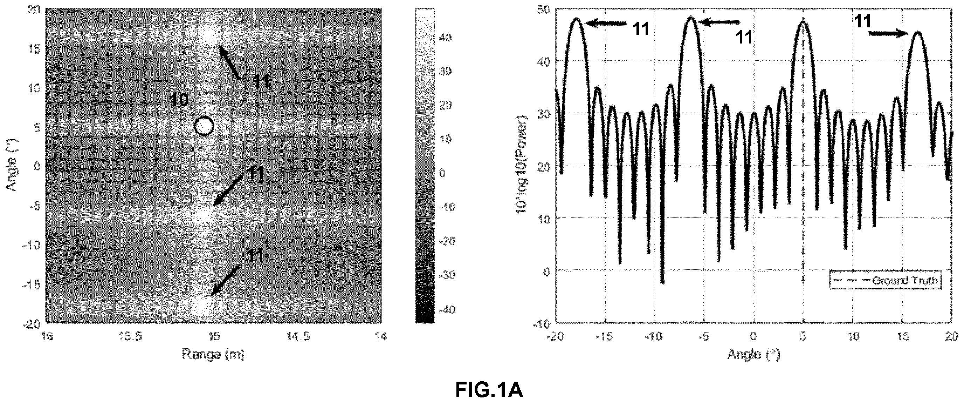

For specific SAR geometries, such as a forward-looking SAR, the SAR provides poor angular resolution refinement for targets at or close to the boresight of the radar. In such specific cases, SAR with MIMO radar topologies, MIMO-SAR, provides angular resolution at the radar boresight equal to that of the effective MIMO aperture. Hence, larger MIMO aperture is desired for such corner case. However, due to limitations on power and memory resources, MIMO apertures with small antenna count are required for the autonomous vehicles mentioned above. To cope with this, a so-called Large MIMO-SAR, LMIMO-SAR, i.e., a MIMO-SAR with antenna spacing larger than half wavelength of the carrier frequency of the radar signal, can be employed. However, the reconstructed radar image acquired by a LMIMO-SAR suffers from the presence of grating lobes, GLs, which are strong detections not corresponding to detections from real targets. More specifically, a grating lobe is the result of a spatial aliasing causing a replica of the main lobe to be observed at a different location, i.e., a GL manifests itself as a ghost target. Despite not affecting the resolution of the reconstructed radar image, the impact of grating lobes on the quality of the image is significant. FIG.1A shows an example of a single target, indicated by the black circle 10 and dashed line, and the resulting grating lobes, indicated by the arrows 11, in the reconstructed image shown on the left and the corresponding cross-range cut shown on the right obtained with a LMIMO-SAR. Due to the large antenna spacing, the grating lobes appear as strong detections mimicking real targets, thus making their rejection difficult.

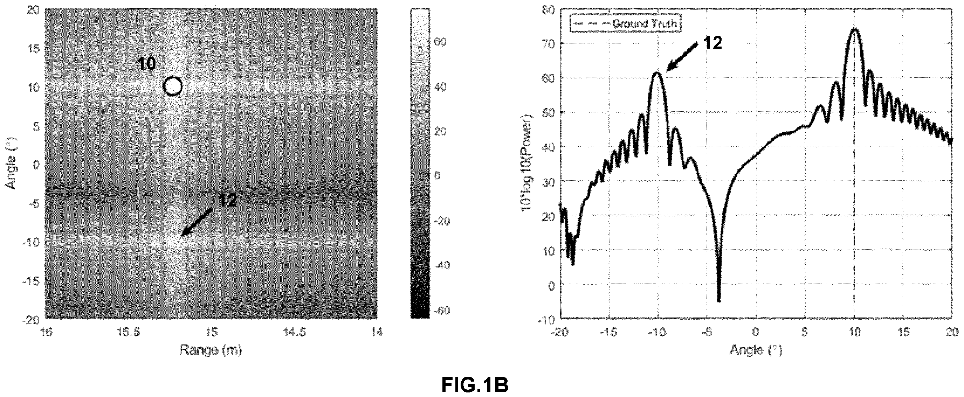

On the other hand, as the real targets within the radar beam have different velocity relative to the moving radar, each target will have a different Doppler shift. Further, as the radar moves, the angle of the target with respect to the radar not only changes with the radar's motion, but it also progresses in a non-linear, i.e., curved, fashion. To account for this effect, Doppler Beam Sharpening, DBS technique is used to exploit the different Doppler shifts at different viewing angles which refines the angular resolution in the reconstructed radar image. However, when the travel path of the radar coincides with its field of view, FOV, i.e., in the case of forward-looking SAR, the DBS technique, causes the appearance of ghost targets because of left-right Doppler Beam Sharpening, DBS, ambiguity observed across the radar's boresight. This is because the DBS technique cannot discriminate between detection located symmetrically around the radar's boresight and having the same slant range history. As a result, the reconstructed radar image will contain detections from the real target as well as detections from a replica of the real target around 0° angle. Such replicas are referred to as mirrors as they appear mirrored around the 0°. FIG.1B shows an example of a single target, indicated by the black circle 10 and dashed line, and the resulting mirror, indicated by the arrow 12, in the reconstructed radar image shown on the left and the corresponding cross-range cut shown on the right obtained with a forward-looking MIMO-SAR, FL-MIMO-SAR. Similarly to the grating lobes, mirrors are also strong detections, mimicking real targets' detections, thus making their rejection difficult.

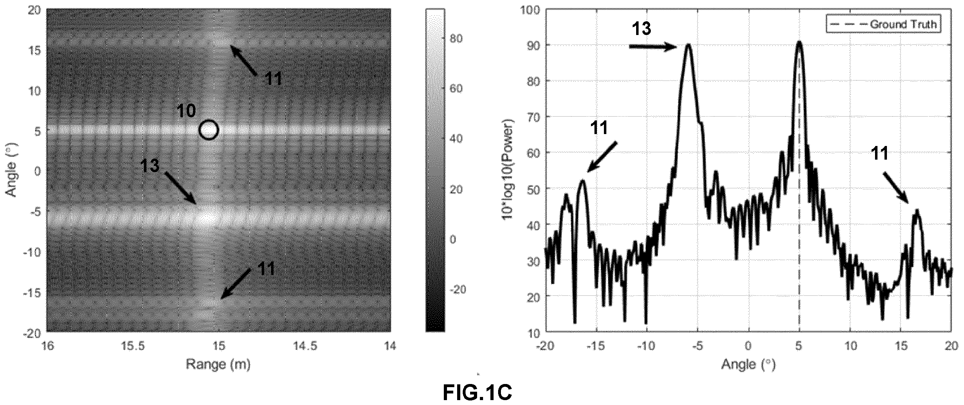

Furthermore, ghost targets may be a result of overlapping grating lobes and mirrors, resulting in an even stronger ghost detection. FIG.1C shows an example of a single target indicated by the black circle 10 and dashed line, the resulting grating lobes indicated by the arrows 11 and the resulting fusion between the mirror and the grating lobes indicated by the arrow 13 in the reconstructed radar image shown on the left and the corresponding cross-range cut shown on the right obtained with a FL-LMIMO-SAR.

Therefore, there is a need for a synthetic aperture radar image reconstruction method which is capable of suppressing ghost targets resulting from grating lobes and/or DBS left-right ambiguities, i.e., mirrors.

## Summary

An object of embodiments of the present disclosure is to provide a method for synthetic aperture radar, SAR, overcoming the above limitations. Further objects of various embodiments of the present disclosure aim to provide a low complexity and power efficient method capable of not only suppressing sidelobes but also ghost targets resulting from grating lobes and/or mirrors while maintaining high range and cross-range resolution.

The scope of protection sought for various embodiments of the invention is set out by the independent claims. The embodiments and features described in this specification that do not fall within the scope of the independent claims, if any, are to be interpreted as examples useful for understanding various embodiments of the invention.

This object is achieved, according to a first example aspect of the present disclosure, by a computer implemented method as defined by claim 1. In particular, the method comprises obtaining at least two radar images from a synthetic aperture radar, SAR. The SAR may be a forward-looking or a side-looking synthetic aperture radar, SAR. Alternatively or additionally, the SAR may be a multiple-input multiple-output synthetic aperture radar, i.e., a MIMO-SAR. In this case, the MIMO-SAR comprises a plurality of transmitters configured to transmit a respective radar signal into the environment and plurality of receivers configured to receive reflections of the respective radar signals within the field of view of the radar. Further, the MIMO-SAR may have antenna spacing larger than half the wavelength of the carrier frequency of the radar signal, which is typically referred to as a Large MIMO-SAR, LMIMO-SAR. In all above SAR configurations, the radar captures reflections of the respective radar signal or signals characterizing the environment falling within the field of view of the radar, i.e., region of interest, at several locations along its travel path or trajectory. The captured reflections may be reconstructed into radar images by various well-known time-domain or frequency-domain reconstruction algorithms, such as Back-Projection, BP, Range-Doppler, RD, or Chirp-Scaling. To this end, the reconstructed radar images could be images representing the region of interest as captured at the various locations along the radar's trajectory, i.e., a series of so-called snapshots, or could even be the images representing the region of interest as captured after combining all snapshots, i.e., a series of SAR images. The radar images may be two-dimensional radar images if they comprise range and azimuth or elevation cross-range information, or three-dimensional radar images if they comprise range and azimuth and elevation cross-range information. To this end, the method can be applied regardless of the dimension of the radar images, of how the radar images are reconstructed, of the radar antenna topology, and/or of the SAR being a forward- or side-looking and irrespective of the SAR having single transmitter and single receiver or multiple transmitters and multiple receivers is used to capture the reflections. Preferably, the method is applied to the snapshots, rather than on the SAR images to suppress ghost targets. For example, applying the method on the snapshots suppresses GLs observed in the snapshots, while applying the method on the SAR images suppresses the GLs and the mirrors observed in the SAR images. Further, applying the method to the SAR images requires more time to observe ghost target suppression as the acquisition and processing time for one SAR image is higher than for one snapshot. Once the radar images, i.e., the snapshots or the SAR images, are obtained, the method proceeds to derive weight maps from the obtained respective radar images. The weight maps are derived by multiplying the range information normalized with respect to the cross-range information and the cross-range information normalized with respect to the range information. As the weight maps are derived from the respective radar images, their calculation can be parallelized. The method then proceeds to combine the radar images which takes into account the derived weight maps to obtain a compensated radar image of the region of interest, i.e., a SAR image with suppressed ghost targets which may result from grating lobes and/or mirrors. Taking the weight maps into account during the combination of the reconstructed radar images, acts as a weighting function for the images which suppresses not only sidelobes but also ghost targets resulting from grating lobes and/or mirrors. Further, the particular way of deriving the weight maps, i.e., by first normalizing the range and cross-range information of the respective radar images and then multiplying the resulting normalized information together, attributes lower weight values for the ghost targets resulting from grating lobes as well as the sidelobes while maintaining high weight values for the main lobes. This is because the normalization exploits the fact that sidelobes are more likely to have lower power levels than the main lobe in the radar images while the multiplication exploits the fact that ghost targets will appear at different locations in the radar images. Moreover, given the targets are static and the radar motion parameters are known, the radar motion is compensated so that the static targets will appear at the same location in the range images. As a result, a SAR image of the region of interest with a high range and cross-range resolution and suppressed sidelobes and even ghost targets is obtained. Further, as the method employs simple mathematical operations, such as normalization and multiplication, a low complexity and a power efficient method is obtained.

Preferably, the combining of the radar images further takes into account a prior knowledge characterizing the region of interest. The prior knowledge may comprise information of the region of interest previously obtained by the SAR. Alternatively or additionally, the prior knowledge may comprise visual and/or non-visual information of the region of interest. For example, the visual information can be a photo image of the region of interest, while the non-visual information can be a thermal or an infrared image of the region of interest. In other words, the combination further takes into account information about the region of interest obtained by means of another sensing modality rather than a radar. This allows to obtain a more accurate radar image of the region of interest as the prior knowledge further improves the detectability of the real targets and the rejection of the sidelobes and ghost targets. That's for proper target detection, fewer radar images would be required. Moreover, the prior knowledge from another sensing modality is also beneficial in scenarios where, apart from target detection, target classification is also required. This is especially relevant in cognitive radar applications where intelligent knowledge-aided radar systems are required to continually sense the region of interest in order to optimize their cognitive performance.

Preferably, the range and cross-range information of the respective radar images are arranged in the form of so-called range-cross-range maps which may be two- or three-dimensional maps. In this case, the weight map for a respective range-cross-range map is derived by calculating two normalized range-cross-range maps one for each dimension of the range-cross-range map. The first normalized range-cross-range map is calculated by normalizing the respective range values of the range-cross-range map across the cross-range dimension and the second map by normalizing the respective cross-range values of the range-cross-range map across the range dimension. In other words, the normalization is performed in a range-by-range fashion and in a cross-range-by-cross-range fashion. The first and second normalized range-cross-range maps are then multiplied together to obtain the weight map for that range-cross-range map, i.e., a weight map is calculated for a corresponding range-cross-range map. More specifically, the weight values of the first and second range-cross-range maps are multiplied using an elementwise multiplication operation. Notably, the calculation of the first and the second normalized range-cross-range maps may also be parallelized.

The combining of the radar images with the weight maps may be done in several ways. Preferably, the combining of the radar images with the weight maps is performed in two steps. In the first step, the obtained radar images are summed together to obtain a combined radar image, i.e., a SAR image. In parallel or following the summation, the derived weight maps for the respective radar images are multiplied together to obtain a resulting weight map. In the second step, the resulting weight map is applied to the combined radar image to obtain the compensated radar image of the region of interest. This is done in an element-wise manner, i.e., by multiplying the respective values of the resulting weight maps, by summing the respective values of the radar images, and then multiplying the respective values of the weight map with the values of the combined radar image. Alternatively, the weight maps are applied to the corresponding radar image to obtain weighted radar images which are then summed together to obtain the compensated radar image of the region of interest. In other words, the step of combining employs successive normalization, which suppresses sidelobes appearing within the same range or cross-range bin as the main lobe. Moreover, the step of combining further employs successive multiplication which suppresses ghost targets resulting from grating lobes and/or mirrors as they migrate in range from snapshot to snapshot or from a SAR image to a SAR image. The combination of successive normalization and successive multiplication implies that the derivation of the weight maps for the respective range-cross-range maps and their combination with the obtained radar images can be performed in an iterative manner. For example, in the preferred way of combining the radar images with the weight maps, at each iteration a weight map for a respective range-cross-range map is obtained which is then multiplied with the weight map derived at the preceding iteration. If a prior knowledge of the region of interest is available, the weight map derived at the first iteration is preferably weighted with the prior knowledge, e.g., by deriving an initial weight map based on the prior knowledge and multiplying it with the weight map derived at the first iteration. In other words, the successive normalization and successive multiplication are performed at the level of the weight maps. In the alternative way of combining the radar images with the weight maps, at each iteration the obtained radar image is first weighted with the derived weight map and then combined with the weighted radar image obtained at the preceding iteration. Again, if a prior knowledge of the region of interest is available, the weighted radar image obtained at the first iteration is preferably weighted with the prior knowledge, e.g., by creating an initial weight map based on the prior knowledge and multiplying it with the weight map or the weighted radar image obtained at the first iteration. In other words, the successive normalization and successive multiplication are performed at the level of radar images.

More preferably, the method further comprises obtaining rotated copies of the respective radar images, and, wherein the step of deriving further comprises deriving weight maps for the respective rotated radar images, and the step of combining to obtain the compensated radar image of the region of interest further comprises taking into account the weight maps for the respective rotated radar images. The rotated radar images can be derived by rotating the obtained radar images. The rotated radar images are then processed as described above, i.e., by multiplying the range information normalized with respect to the cross-range information and the cross-range information normalized with respect to the range information, to derive the weight maps for the respective rotated range-cross-range maps. These rotated weight maps together with the weight maps derived from the unrotated radar images are then all taken into account in the combining step to obtain the compensated radar image. As detailed above the combination can be performed in several ways. Preferably, the rotated weight maps for the respective rotated radar images are multiplied together to obtain a resulting rotated weight map. The resulting rotated weight map is then inverse rotated and summed together with the resulting weight map obtained from the unrotated radar images to produce a final weight map. This final weight map is then applied to the combined radar image to obtain the compensated radar image of the region of interest. Alternatively, the rotated weight maps can be applied to the corresponding rotated radar images which are then summed together to obtain a rotated compensated radar image. This image can then be inverse rotated and summed together with its unrotated counterpart to obtain the compensated radar image. Employing the rotated weight maps allows preventing the effect of the normalization on weaker targets which lie together with a stronger target in the same range or cross-range. This is possible as the rotation migrates the weaker targets to a different range or cross-range and thus allows to maintain their power levels in the compensated radar image.

According to a second example aspect a SAR imaging system is disclosed having the features of claim 12. In particular, the SAR imaging system is programmed for carrying out the computer implemented method according the first example aspect. Accordingly, the SAR imaging system may comprise at least one processor and at least one memory including computer program code, the at least one memory and computer program code configured to, with the at least one processor, cause the performing of the SAR imaging system. The SAR imaging system may be further configured to derive the radar images from the reflections captured by the radar, for example, by carrying out various well-known time-domain or frequency-domain reconstruction algorithms as the ones mentioned above. Depending on the reconstruction algorithm used, the reconstructed radar images may be a series of snapshots or a series of SAR images from which the compensated SAR image is derived.

According to a third example aspect a computer program product is disclosed having the features of claim 14. In particular, the computer program product comprises computer-executable instructions for causing the SAR imaging system or a computer to perform the method according to the first example aspect.

According to a fourth example aspect a computer readable storage medium is disclosed having the features of claim 15. In particular, the computer readable storage medium comprises computer-executable instructions for performing the method according to first example aspect when the program is run on a SAR imaging system or a computer.

Accordingly, the various example embodiments of the first example aspects may be applied as example embodiments to the second, third, and fourth example aspects.

## Brief Description of the Drawings

Some example embodiments will now be described with reference to the accompanying drawings.

FIG.1A shows a first example of a reconstructed radar image and a corresponding cross-range cut illustrating the impact of grating lobes.

FIG.1B shows a second example of a reconstructed radar image and a corresponding cross-range cut illustrating the impact of left-right DBS ambiguity.

FIG.1C shows a third example of a reconstructed radar image and a corresponding cross-range cut illustrating the combined impact of grating lobes and left-right DBS ambiguity.

FIG.2A shows an overview flowchart of the process steps for synthetic aperture radar image reconstruction according to an example embodiment of the present disclosure.

FIG.2B shows an overview flowchart of the process steps for side lobes and ghost suppression according to embodiments of the present disclosure.

FIG.2C shows a detailed flowchart of the process steps for side lobes and ghost suppression according to a first example embodiment of the present disclosure.

FIG.2D shows a detailed flowchart of the process steps for side lobes and ghost suppression according to a second example embodiment of the present disclosure.

FIG.3A to FIG.3D shows an example of results at various steps of the method of FIG.2C to obtain a first weight map for a first radar image.

FIG.4A to FIG.4E shows an example of results at various steps of the method of FIG.2C to obtain a second weight map for a second radar image, and the resulting weight map after combining the second weight map with the first weight map.

FIG.5A to FIG.5F shows an example of results at various steps of the method of FIG.2C to obtain a third weight map for a third radar image, and the resulting weight map after combining the third weight map with the first and second weight maps, and a final weight map obtained after combining four weight maps.

FIG.6A shows a comparison of a first example of a SAR image obtained with a conventional SAR processing and its counterpart obtained after applying the method for ghost suppression according to the present disclosure.

FIG.6B shows a comparison of a second example of a SAR image obtained with a conventional SAR processing and its counterpart obtained after applying the method for ghost suppression and their corresponding cross-range cuts according to the present disclosure.

FIG.6C shows a comparison of a third example of a SAR image obtained with a conventional SAR processing and its counterpart obtained after applying the method for ghost suppression and their corresponding cross-range cuts according to the present disclosure.

FIG.6D shows a comparison of a fourth example SAR image obtained with a conventional SAR processing and the SAR image obtained after applying the method for ghost suppression according to the present disclosure.

FIG.6E shows a comparison of a fifth example of a SAR image obtained with a conventional SAR processing and its counterpart obtained after applying the method for ghost suppression and their corresponding cross-range cuts according to the present disclosure.

FIG.6F shows a comparison of a sixth example of a SAR image obtained with a conventional SAR processing and its counterpart obtained after applying the method for ghost suppression and their corresponding cross-range cuts according to the present disclosure.

FIG.7 shows an example embodiment of a suitable computing system for performing one or several steps in embodiments of the present disclosure.

## Detailed Description of Embodiment(s)

The present disclosure relates to a synthetic aperture radar imaging system and a computer implemented method for providing synthetic aperture radar images, SAR images, with attenuated or suppressed ghost targets resulting from grating lobes and/or mirrors, as well as sidelobes.

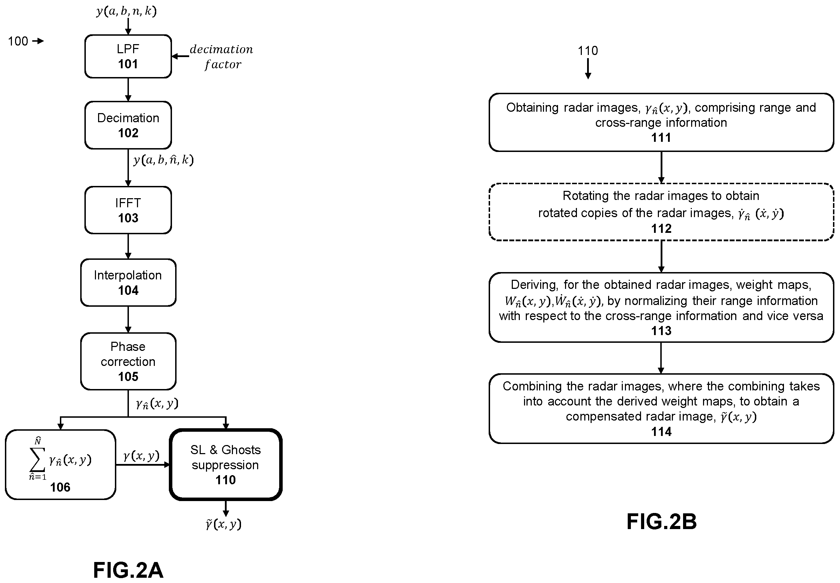

FIG.2A shows a block scheme of a synthetic aperture radar, SAR, processing according to example embodiments of the present disclosure. In this example, the SAR processing employs the Back-Projection reconstruction as described by Albaba, Adnan, et al. "Forward-Looking MIMO-SAR for Enhanced Radar Imaging in Autonomous Mobile Robots. " IEEE Access (2023). The Back-Projection reconstruction employs several processing steps which reconstruct the reflections of the radar signals captured at the various locations by the radar along its travel path or trajectory into so-called radar images. The reconstructed radar images comprise range and cross-range information which characterize the region of interest as observed by the radar at the respective locations. In this example, the radar is presumed to be a forward-looking LMIMO-SAR, FL-LMIMO-SAR. To this end, the FL-LMIMO-SAR is a radar with a travel path or trajectory coinciding with the field of view, FOV, of the radar which comprises a plurality of transmitters configured to transmit a respective radar signal into the environment and plurality of receivers configured to receive reflections of the respective radar signals within the field of view of the radar and at respective locations along the travel path of the radar and which has spacing of the antennas larger than half the wavelength of the carrier frequency of the radar signals. In other words, the radar captures reflections of the respective radar signals at several location within its field of view, FOV, i.e., the region of interest, along its travel path or trajectory.

The captured reflections at the various locations are represented in the form of slow-time and fast-time data array with the various captures being referred to as slow-time samples while the reflections within respective captures as fast-time samples. The slow-time and fast-time data array can be thus expressed by $y(a, b, n, k)$, where $a$ and $b$ indicate the respective transmitter and receiver, $n$ indicates the slow-time samples and $k$ the fast-time samples. Optionally, the data array may be low-pass filtered, LPF, 101 and decimated 102 along its slow-time dimension to speed up the reconstruction process. The resulting slow-time and fast-time data array can be expressed as $y(a, b, n, k)$. To reconstruct the SAR image from the resulting slow-time and fast-time data array, the Back-Projection reconstruction applies an Inverse Fast Fourier Transformation, IFFT, 103 along the fast-time dimension, linear interpolation 104 and a phase correction 105 to extract the range and cross-range information at decimated slow-time samples $\hat{n}$ as a function of the spatial coordinates ($x = 1,2, ... ,X$ and $y = 1,2, \cdots, Y$). In other words, the reconstructed range and cross-range information characterizes the region of interest as captured by the radar at the respective locations along its travel path. The range and cross-range information at the respective slow-time samples is typically referred to as a reconstructed radar image or a snapshot and can be presented in the form of a data array or a map $y_{\hat{n}}(x, y)$. After obtaining the radar images, the Back-projection reconstruction proceeds to build the SAR image $\gamma(x, y)$ by coherently adding 106 all reconstructed radar images. The Back-projection reconstruction described by Albaba, Adnan, et al. "Forward-Looking MIMO-SAR for Enhanced Radar Imaging in Autonomous Mobile Robots" IEEE Access (2023), is modified to perform the additional step 110 to produce a SAR image with suppressed sidelobes and ghosts resulting from grating lobes and/or mirrors and which will be detail below with reference to FIG.2B.

FIG.2B shows an overview flowchart of the process steps for sidelobe and ghost targets suppression according to various embodiments of the present disclosure. In a first step 111, a series of radar images, i.e., a series of snapshots $y_{\hat{n}}(x, y)$, is obtained from the Back-Projection reconstruction algorithm shown in FIG.2A. This series may contain two or more snapshots. As detailed above, each snapshot comprises range and cross-range information in the form of a range-cross-range map. For ease of explanation, the range-cross-range maps are presumed to be two-dimensional. In the optional step 112, the obtained range-cross-range maps are rotated to obtain rotated copies of the snapshots $\dot{\gamma}_{\hat{n}}(\dot{x}, \dot{y})$ by applying a rotation operation to the respective maps. In the next step 113, weight maps for the respective rotated and unrotated range-cross-range maps are derived. For this, two normalization operations are performed: one normalizing the range information of the respective rotated and unrotated maps with respect to the cross-range information and another one normalizing the cross-range information of the respective rotated and unrotated maps with the respect to the range information. The obtained normalized maps for the respective range-cross-range maps are then multiplied together to produce the weight map for that range-cross-range map. Thus, a pair of weight maps $W_{\hat{n}}(x, y)$ and $\dot{W}_{\hat{n}}(\dot{x}, \dot{y})$, one for each rotated and unrotated range-cross-range map, is derived. That is, for two rotated and two unrotated range-cross-range maps, two pairs of weight maps are obtained. In the final step, i.e., step 114, the range-cross-range maps and the obtained weight maps are combined to produce a SAR image with suppressed sidelobes and ghost targets.

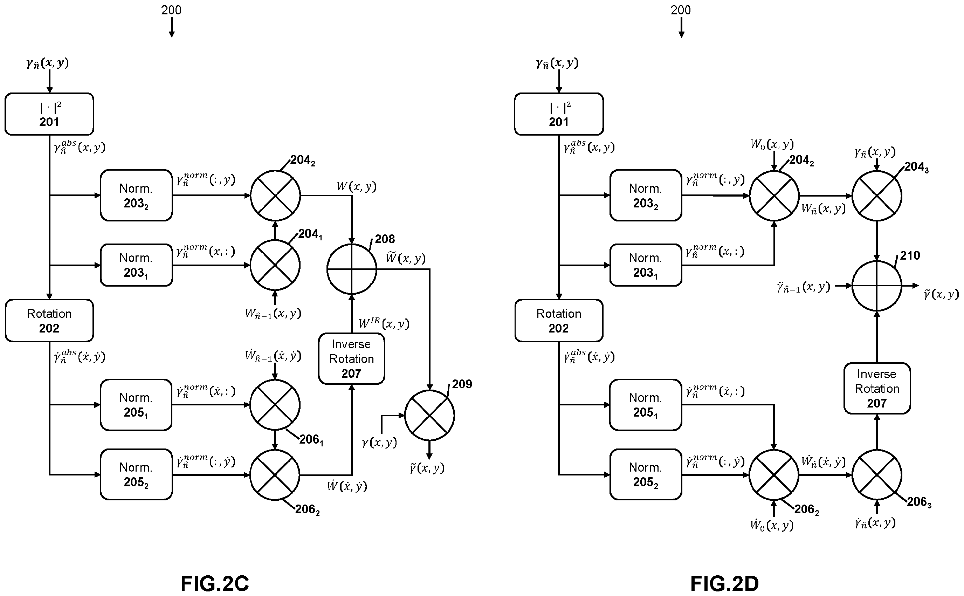

The process steps of FIG.2B can be implemented in several ways. For these two example implementations will be detailed below with reference to FIG.2C and FIG.2D. FIG.2C shows a preferred embodiment as it provides optimal suppression using a very low complexity and power efficient implementation. FIG.2D shows a less preferred embodiment as it provides suboptimal suppression using a somewhat higher complexity and less power efficient implementation.

FIG.2C shows a detailed flowchart of the process steps for sidelobes and ghost suppression according to the first and preferred example embodiment of the present disclosure. To lower the computational complexity of the normalization of the range-cross-range maps, it is preferred to convert the range-cross-range maps in absolute values. For this, absolute value range-cross-range maps $\gamma_{\hat{n}}^{abs}(x, y)$ are first derived in 201, by squaring the values in the respective range-cross-range maps. The absolute value range-cross-range maps are rotated 202, to obtain rotated copies of the respective maps $\dot{\gamma}_{\hat{n}}^{abs}(\dot{x}, \dot{y})$. The rotated and unrotated squared range-cross-range maps are then processed in parallel in two processing branches.

In the top processing branch, the unrotated range-cross-range maps $\gamma_{\hat{n}}^{abs}(x, y)$ are processed sequentially to derive a pair of weight maps for a respective unrotated range-cross-range maps by normalizing $203_1$ the respective range values of each map across the cross-range dimension and by normalizing $203_2$ the respective cross-range values of each map across the range dimension, i.e., the normalization is performed on a range-by-range and on a cross-range-by-cross-range fashion.

The corresponding values of the map normalized across the cross-range dimension $\gamma_{\hat{n}}^{norm}(x, :)$ and the map normalized across the range dimension $\gamma_{\hat{n}}^{norm}(:, y)$ are multiplied together $204_2$ to obtain the weight map $W_{\hat{n}}(x, y)$ for the respective range-cross-range map. Next, this weight map is multiplied $204_1$ with the weight map $W_{\hat{n}-1}(x, y)$ obtained for the preceding range-cross-range map, to obtain one weight map $W(x, y)$ for all already processed unrotated range-cross-range maps. Notably, when processing the first range-cross-range map $\gamma_1^{abs}(x, y)$ the multiplication step $204_1$ can be either omitted or the weight map $W_1(x, y)$ can be multiplied with an initial weight map $W_0(x, y)$ containing only 1's. Alternatively, if a prior knowledge on the region of interest previously obtained from the SAR or from another sensing modality such as a camera is available, the initial weight map $W_0(x, y)$ may be initialized with that prior knowledge. The initialization can be done by for example scaling the camera image to the resolution of the weight map and then normalizing the scaled camera image. The camera image may contain visual and/or non-visual information of the region of interest, such as a photo image or an infrared or thermal image. Summarized, the processing is done such that the unrotated range-cross-range maps are used to sequentially or iteratively update the initial weight map $W(x,y)$. Otherwise said, the resulting weight map $W(x,y)$ is equivalent to the multiplication of all weight maps derived from the respective radar images. This means that calculation of the weight maps from the respective range-cross-range maps may be parallelized.

Similarly to above, in the bottom processing branch, the rotated range-cross-range maps

$\dot{\gamma}_{\hat{n}}^{abs}(\dot{x}, \dot{y})$ are also processed sequentially to derive a pair of weight maps for a respective unrotated range-cross-range map by normalizing $205_1$ the respective range values of each map across the cross-range dimension of the respective and by normalizing $205_2$ the respective cross-range values of each map across the range dimension. The corresponding values of the map normalized across the cross-range dimension $\dot{\gamma}_{\hat{n}}^{norm}(\dot{x}, :)$ and the map normalized across the range dimension $\dot{\gamma}_{\hat{n}}^{norm}(:, \dot{y})$ are then multiplied together $206_2$ to obtain the weight map $\dot{W}_{\hat{n}}(x, y)$ for the respective rotated range-cross-range map. Next, this weight map is multiplied $206_1$ with the weight map $\dot{W}_{\hat{n}-1}(\dot{x}, \dot{y})$ obtained for all already processed rotated range-cross-range maps, to obtain one weight map $\dot{W}(\dot{x}, \dot{y})$ for all rotated range-cross-range maps. Similarly to above, when processing the first rotated range-cross-range map $\dot{\gamma}_1^{abs}(x, y)$ the multiplication step $206_1$ can be either omitted or the weight map $\dot{W}_1(x, y)$ can be multiplied with an initial weight map $\dot{W}_0(x, y)$ containing only 1's or with a prior knowledge previously obtained from the SAR or from another sensing modality as detailed above. Summarized, the unrotated range-cross-range maps are used to sequentially or iteratively update the initial weight map $\dot{W}(\dot{x}, y)$. Otherwise said, the resulting weight map $\dot{W}(\dot{x}, \dot{y})$ is equivalent to the multiplication of all weight maps derived from the respective radar images. Again, this means that the calculation of the weight maps in this processing branch may also be parallelized.

Next, the weight map $W(x, y)$ obtained from the rotated range-cross-range maps is inverse rotated in step 207 and then summed together with the weight map $W(x, y)$ obtained from the unrotated range-cross-range maps in step 208 to produce the final weight map $\bar{W}(x, y)$. Finally, in step 209, the final weight map is multiplied with the combined radar image, i.e., the SAR image $\gamma(x,y)$ which is obtained in step 106 of the Back-Projection reconstruction. Thus, in step 209, the final weight map $\bar{W}(x, y)$ is used as a weighting function for the power of the respective values of the SAR image y(x,y). The result is a compensated SAR image $\tilde{\gamma}(x, y)$, i.e., a SAR image with significantly suppressed or even completely attenuated sidelobes and ghost targets and maintained main lobes.

As described above, the calculation of the weight map $\bar{W}(x, y)$ is performed in spatial domain and is obtained by sequentially updating its values with the values of the range-cross-range maps. Thus, the above processing can be referred as to a Sequential Spatial Masking, SSM, which uses the weight map $\bar{W}(x, y)$ as a weighting function for the power of the values of the SAR image. Further, the SSM is a low-complexity and power-efficient method as it almost fully based on element-wise mathematical operations, such as summation and multiplication. The required rotation and the inverse rotation operations can also be implemented in power efficient and low complexity manner.

FIG.2D shows a detailed flowchart of the process steps for sidelobes and ghost suppression according to the second and less preferred example embodiment of the present disclosure. Those parts of the flowchart which are identical to those shown in FIG.2C are denoted by identical reference signs. Similarly to the first embodiment, absolute valued range-cross-range maps $\gamma_{\hat{n}}^{abs}(x, y)$ are first derived 201 from the obtained range-cross-range maps $\gamma_{\hat{n}}(x, y)$ by squaring their respective values. Next, the absolute value range-cross-range maps are rotated 202 to obtain rotated copies of the respective maps $\dot{\gamma}_{\hat{n}}^{abs}(\dot{x}, \dot{y})$. The rotated and unrotated squared range-cross-range maps are then processed in parallel in two processing branches.

In the top processing branch, the unrotated range-cross-range maps $\gamma_{\hat{n}}^{abs}(x, y)$ are processed sequentially or iteratively to derive the pair of weight maps for a respective unrotated range-cross-range maps. Again, this is done by normalizing $203_1$ the respective range values of each map across the cross-range dimension and by normalizing $203_2$ the respective cross-range values of each map across the range dimension. The corresponding values of the resulting normalized maps, i.e., $\gamma_{\hat{n}}^{norm}(x, :)$ and $\gamma_{\hat{n}}^{norm}(:, y)$, are then multiplied together $204_2$ to obtain the weight map $W_{\hat{n}}(x, y)$ for the respective range-cross-range map. Differently from the first example embodiment, herein the weight map $W_{\hat{n}}(x, y)$ is applied $204_3$ to its corresponding range-cross-range map $\gamma_{\hat{n}}(x, y)$ to obtain a weighted range-cross-range map. In case, a prior knowledge of the region of interest previously obtained from the SAR or from another sensing modality is available, the prior knowledge may be scaled and normalized to obtain an initial weight map $W_0(x, y)$ which can be multiplied together $204_2$ with the normalized maps to obtain the first weight map $W_1(x, y)$. Thus, the first weighted radar image will additionally be weighted with the prior knowledge. Alternatively, the prior knowledge may be taken into account in step 210. In this case, in the summation step 210 the weighted range-cross-range map obtained at the first iteration $\tilde{\gamma}_1(x, y)$ is initialized with the available prior knowledge which is scaled to the resolution of the radar image and then normalized to the value range of the radar image. If no prior knowledge is available, then the summation 210 at the first iteration is omitted.

In the bottom processing branch, the rotated range-cross-range maps $\dot{\gamma}_{\hat{n}}^{abs}(\dot{x}, \dot{y})$ are processed sequentially or iteratively to derive the pair of weight maps for a respective unrotated range-cross-range maps. Again, this is done by normalizing $205_1$ the re-

spective range values of each map across the cross-range dimension and by normalizing $205_2$ the respective cross-range values of each map across the range dimension. The corresponding values of the resulting normalized maps, i.e., $\dot{\gamma}_{\hat{n}}^{norm}(\dot{x},:)$ and $\dot{\gamma}_{\hat{n}}^{norm}(:,\dot{y})$, are then multiplied together $206_2$ to obtain the weight map $\dot{W}_{\hat{n}}(x, y)$ for the respective range-cross-range map. This weight map $\dot{W}_{\hat{n}}(x, y)$ is then applied $206_3$ to its corresponding rotated range-cross-range map $\dot{\gamma}_{\hat{n}}(x,y)$ to obtain a weighted range-cross-range map.

Next, the weighted rotated range-cross-range map is inverse rotated in step 207 and finally summed together in step 210 with the weighted unrotated range-cross-range map, to obtain the weighted combined radar image $\tilde{\gamma}_{\hat{n}}(x, iy)$. Thus, for each range-cross-range map, a weighted and combined radar image is obtained. In this step, the weighted combined radar image is further combined with all previously obtained weighted combined radar images $\tilde{\gamma}_{\hat{n}-1}(x, y)$ to produce the compensated SAR image $\tilde{\gamma}(x, y)$. Similarly to the first embodiment, herein at each iteration one range-cross-range map is processed with the difference that the weighting and therefore the sidelobes and ghost suppression is performed at the level of the individual range-cross-range maps $\gamma_{\hat{n}}(x, y)$ rather than at the level of the combined range-cross-range map $\tilde{\gamma}(x, y)$, i.e., the SAR image obtained from the Back-Projection reconstruction. As a result, the herein obtained compensated SAR image provides suboptimal suppression using a somewhat higher complexity and less power efficient implementation. However, if the weighted unrotated and rotated radar images are respectively updated with the previously obtained weighted unrotated and rotated radar images by multiplying them together the obtained compensated SAR image will offer optimal suppression as in the embodiment of FIG.2C.

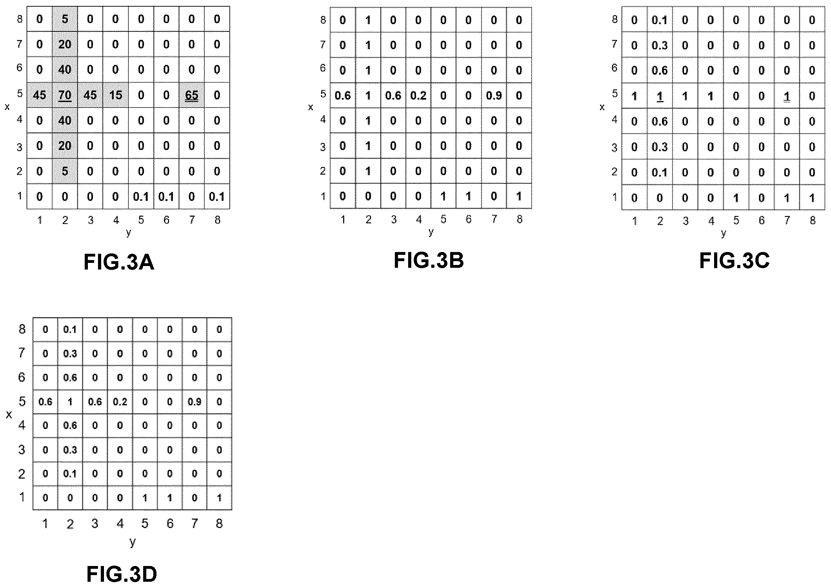

FIG.3A to FIG.3D show results of the various steps of the method of FIG.2C to obtain the weight map for the first range-cross-range map from the obtained sequence of range-cross-range maps. More specifically, FIG.3A shows the absolute valued range-cross-range map obtained in step 201 where the value in the range-cross-range map underlined with a single line shows the main lobe of the real target, the value underlined with a double line shows a ghost target resulting from a grating lobe and/or mirrors, and the values shaded in grey colour the sidelobes resulting from the real target. FIG.3B shows the normalized range information with respect to the cross-range information obtained in step $203_1$, FIG.3C shows the normalized cross-range information obtained in step $203_2$, and FIG.3D shows the weight map $W_1(x, y)$ for the first range-cross-range map obtained in step $204_2$. As it can be seen from the figures, the power level of the sidelobes will be already significantly suppressed, the power level of the ghost target will be slightly attenuated while the power level of the main lobe will be maintained once the weight map of FIG.3D is applied in step 209 to the range-cross-range map. In other words, suppression is observed even on a single range-cross-range map.

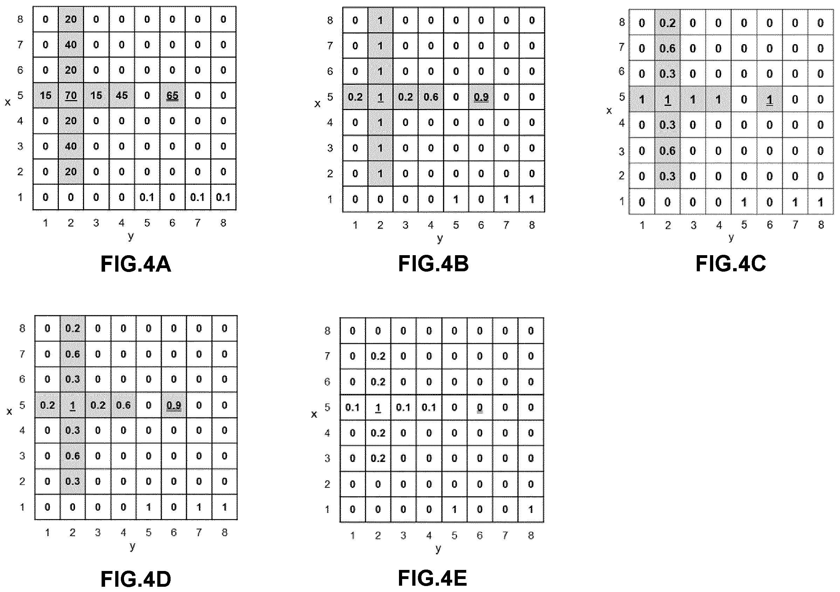

FIG.4A to FIG.4E show results of the various steps of the method of FIG.2C to obtain the weight map for the second range-cross-range map from the obtained series of range-cross-range maps. Herein, FIG.4A shows the absolute valued range-cross-range map obtained in step 201. Again, the value in the range-cross-range map underlined with a single line shows the main lobe of the real target, the value underlined with a double line shows a ghost target resulting from a grating lobe and/or mirror, and the values shaded in grey colour the sidelobes resulting from the real target. FIG.4B shows the normalized range information with respect to the cross-range information obtained in step $203_1$, FIG.4C shows the normalized cross-range information obtained in step $203_2$, FIG.4D shows the weight map $W_2(x, y)$ for the second range-cross-range map obtained in step $204_2$, and FIG.4E shows the resulting weight map $W_2(x, y)$ obtained after performing both step $204_1$ and step $204_2$, i.e., after multiplying or weighting the weight map $W_2(x, y)$ for the second range-cross-range map with the weight map for first range-cross-range map $W_1(x, y)$. FIG.4E clearly shows that the power levels of the sidelobes and the ghost target will be almost completely suppressed while the power level of the main lobe will be maintained once the obtained weight map of FIG.4E is applied in step 209 to the SAR image $\gamma(x,y)$ obtained from the combination of only two range-cross-range maps in step 106.

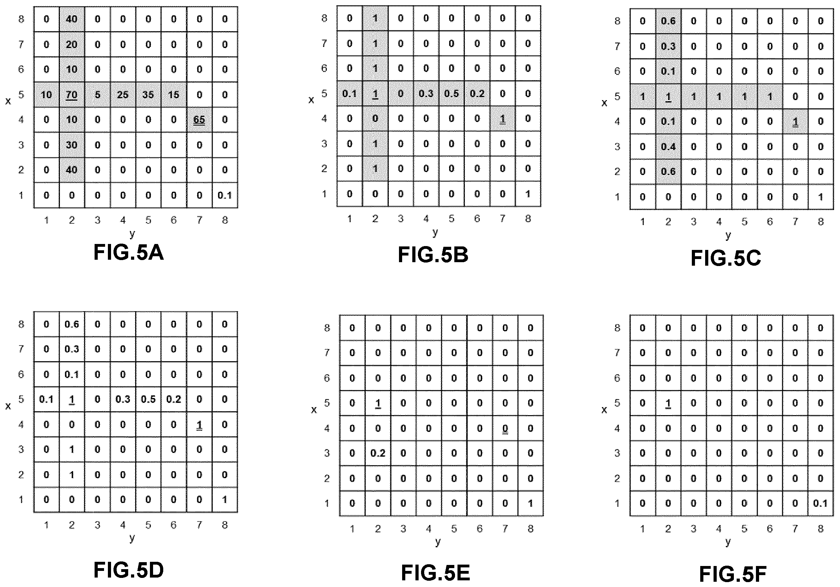

FIG.5A to FIG.5E show results of the various steps of the method of FIG.2C to obtain the weight map for the third range-cross-range map from the obtained series of range-cross-range maps. Herein, FIG.5A shows the absolute valued range-cross-range map obtained in step 201. Again, the value in the range-cross-range map underlined with a single line shows the main lobe of the real target, the value underlined with a double line shows a ghost target resulting from a grating lobe and/or mirror, and the values shaded in grey colour the sidelobes resulting from the real target. FIG.5B shows the normalized range information with respect to the cross-range information obtained in step $203_1$, FIG.5C shows the normalized cross-range information obtained in step $203_2$, FIG.5D shows the weight map $W_3(x, y)$ for the third range-cross-range map obtained in step $204_2$, and FIG.4E shows the resulting weight map $W_{\hat{3}}(x, y)$ obtained after performing both step $204_1$ and step $204_2$, i.e., after multiplying or weighting the weight map for the third range-cross-range map $W_3(x, y)$ with the weight map obtained at the previous iteration $W_{\hat{2}}(x, y)$. FIG.5F shows the weight map $W_{\hat{4}}(x, y)$ obtained after multiplying the weight maps obtained from a sequence of four range-cross-range maps. FIG.5E clearly show that the power levels of the sidelobes and the ghost target will be even further suppressed while the power level of the main lobe will be maintained once the obtained weight map of FIG.5E is applied in step 209 to the SAR image y(x,y) obtained from the combination of only three range-cross-range maps in step 106. Similarly, FIG.5F shows the weight map $W_4(x, y)$ obtained after multiplying the weight maps obtained from the sequence of four range-cross-range maps. FIG.5F clearly show that the power levels of the sidelobes and the ghost target will be fully suppressed while the power level of the main lobe will be maintained once the obtained weight map of FIG.5F is applied in step 209 to the SAR image $\gamma(x, y)$ obtained from the combination of four range-cross-range maps in step 106. The results shown in FIG.3, FIG.4, and FIG.5 demonstrates the efficiency of the SSM in the suppression of the sidelobes and ghost targets.

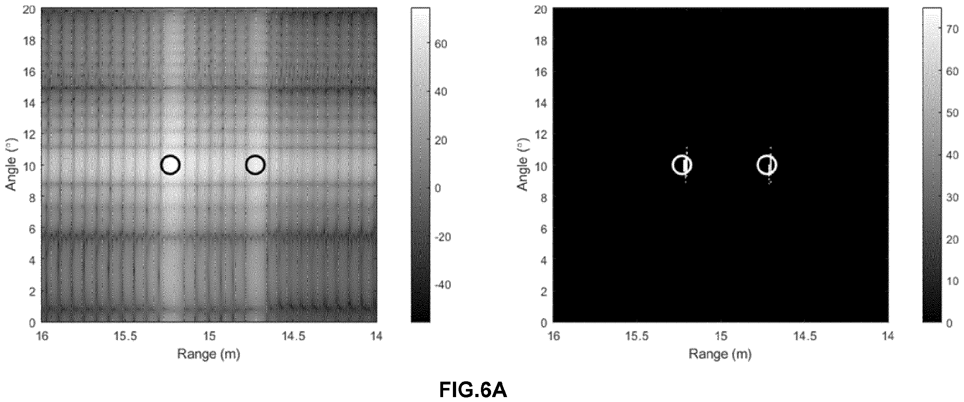

FIG.6A shows a comparison of a first example SAR image obtained from 42 radar images with a BP reconstruction algorithm, and the SAR image obtained from the same number of radar images with the proposed method of FIG.2C. On the left-hand side of the figure, the SAR image obtained with the conventional SAR processing shows to reflectivity of one strong and one weaker real target with 10 dB power difference indicated by the circles and their corresponding sidelobes. As it can be seen, the power of the targets and the stronger sidelobes in the SAR image are comparable thus making it difficult to distinguish between them. On its right-hand side, the corresponding SAR image obtained with the proposed method shows the power of the stronger and the weaker targets preserved power while the power of the sidelobe being significantly suppressed, even completely attenuated.

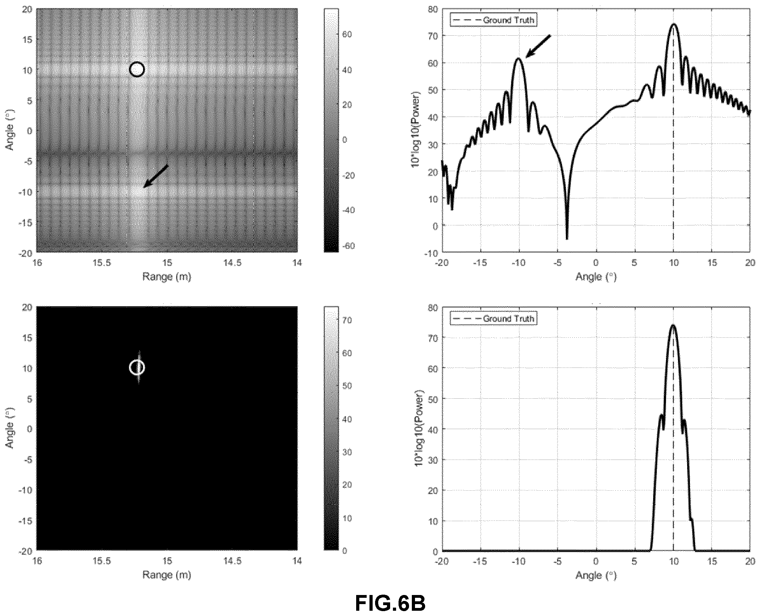

FIG.6B shows a comparison of a second example SAR image obtained from 42 radar images with a conventional SAR processing and the SAR image obtained from the same number of radar images with the proposed method of FIG.2C. On the top, left-hand side of the figure, the SAR image obtained with the conventional SAR processing shows to contain one real target indicated by the circle and the resulting mirror indicated by the arrow as well as their corresponding side lobes. In contrast, the SAR image obtained with the obtained with the proposed method (see bottom, left-hand side of the figure) shows the power of the target preserved while the mirror and the sidelobes being significantly suppressed, even completely attenuated. This is also clearly shown in their corresponding cross-range cuts shown on the right-hand side of the figure.

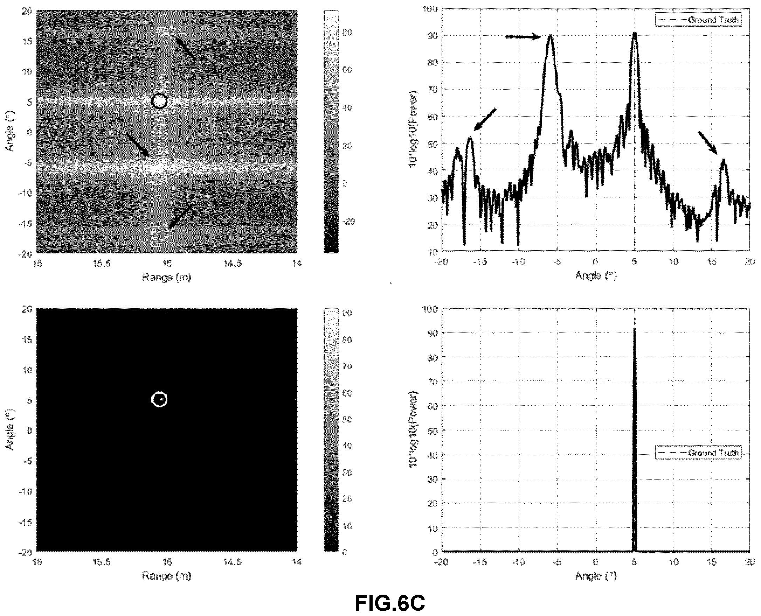

FIG.6C shows a comparison of a third example SAR image obtained from 84 radar images with a conventional SAR processing and the SAR image obtained from the same number of radar images with the proposed method of FIG.2C. On the top, left-hand side of the figure, the SAR image obtained with the conventional SAR processing shows to contain one real target indicated by the circle, the resulting grating lobes caused by the larger antenna spacing indicated by the top and bottom arrows, the resulting mirror fused with the closest grating lobe indicated by the middle arrow as well as their corresponding side lobes. In contrast, the SAR image obtained with the obtained with the proposed method (see bottom, left-hand side of the figure) shows the power of the target preserved while the resulting grating lobes, the mirror fused with the closest grating lobe, and the sidelobes being significantly suppressed, even completely attenuated. This is also clearly shown in their corresponding cross-range cuts shown on the right-hand side of the figure.

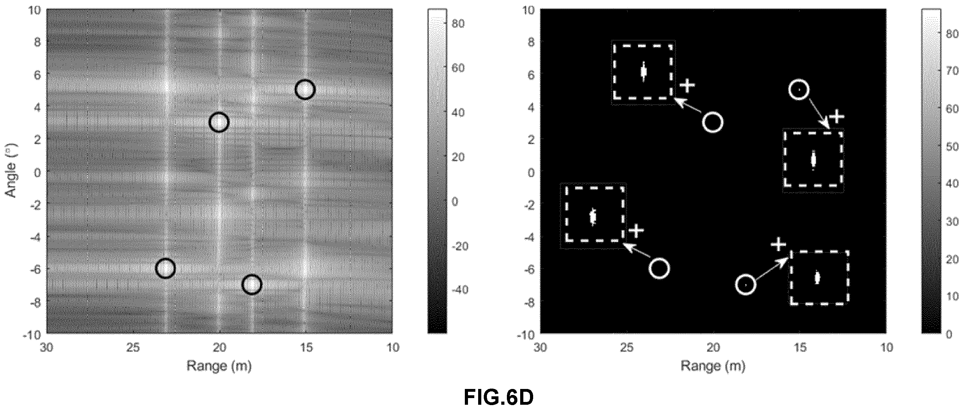

FIG.6D shows a comparison of a fourth example SAR image obtained from 84 radar images with a conventional SAR processing and the SAR image obtained from the same number of radar images with the proposed method of FIG.2C. On its left-hand side, the SAR image obtained with the conventional SAR processing shows to contain four real targets indicated by the circle, many resulting grating lobes, and mirrors, as well as their corresponding side lobes. In contrast, the SAR image obtained with the obtained with the proposed method (see right-hand side of the figure) shows the power of the real targets preserved while the ghost targets resulting from the grating lobes and the mirrors, as well as the sidelobes being significantly suppressed, even completely attenuated. This is also clearly shown in their corresponding cross-range cuts shown on the right-hand side of the figure.

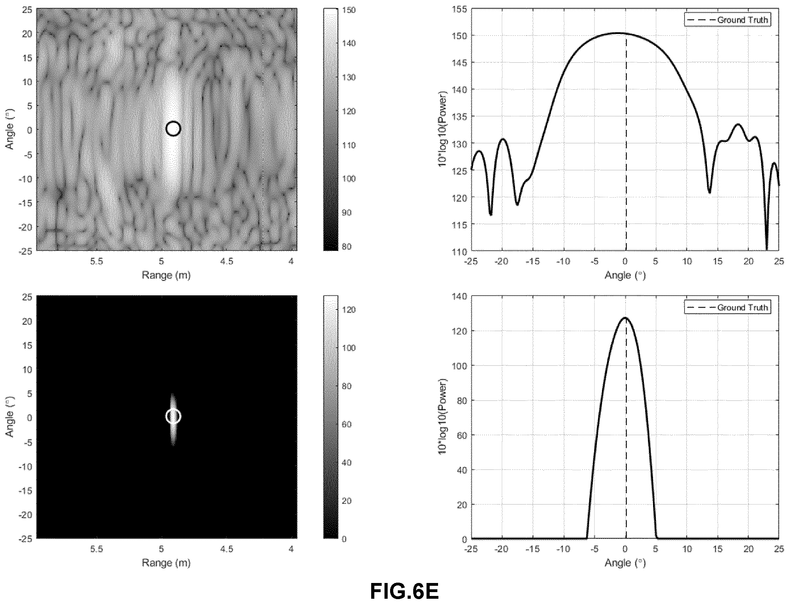

FIG.6E shows a comparison of a fifth example SAR image obtained from 15 radar images with a conventional SAR processing and the SAR image obtained from the same number of radar images with the proposed method of FIG.2C. Herein, the SAR images were obtained with real data measurements on an experimental setup. A TI radar, AWR1443BOOST evaluation module, deployed on a turtle bot moving towards a corner reflector with a velocity of 0.5m/s has been used. On the top, left-hand side of the figure, the SAR image obtained with the conventional SAR processing shows to contain the real target, i.e., the corner reflector, indicated by the circle, and a high noise floor cause by the anechoic foam used in the experimental setup. In contrast, the SAR image obtained with the obtained with the proposed method (see bottom, left-hand side of the figure) shows the power of the target preserved while high noise floor being significantly suppressed, even completely attenuated. This is also clearly shown in their corresponding cross-range cuts shown on the right-hand side of the figure. Further, it can be observed, on the top cross-range cut, the maximum power in the SAR image obtained with the conventional SAR processing, does not coincide with the target's true location. Despite that, the SAR image obtained with the proposed method, not only preserves the target's power but it localizes it very close to its true location.

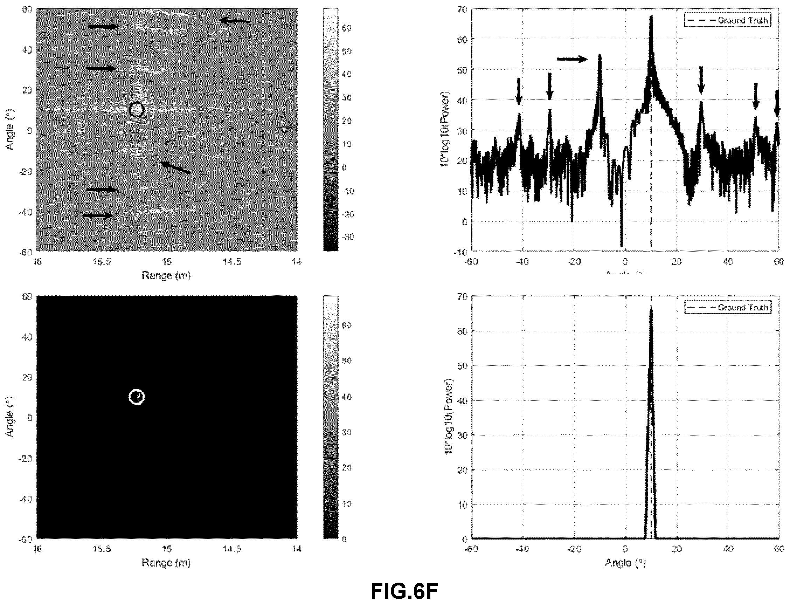

FIG.6F shows a comparison of a sixth example SAR image obtained from 25 radar images with a conventional SAR processing and the SAR image obtained from the same number of radar images with the proposed method of FIG.2C. This comparison example is different from all of the above in the fact that the reflections captured by the radar along its travel path are spaced larger than half wavelength of the carrier frequency, i.e., the snapshots are taken at a rate higher than the Nyquist rate, which also results in the formation of grating lobes. On the top, left-hand side of the figure, the SAR image obtained with the conventional SAR processing shows to contain one real target indicated by the circle, the resulting grating lobes caused by the larger spacing between snapshots, the mirror, and the corresponding side lobes indicated by the arrows. In contrast, the SAR image obtained with the proposed method (see bottom, left-hand side of the figure) shows the power of the target preserved while the grating lobes, the mirror, and the sidelobes being significantly suppressed, even completely attenuated. This is also clearly shown in their corresponding cross-range cuts shown on the right-hand side of the figure.

According to further example embodiments of the present disclosure, the method for suppressing sidelobes and ghost targets and as described above with reference to FIG.2B to FIG.2D can be successfully applied to a sequence of SAR images $\gamma(x, y)$ rather than to a sequence of snapshots $\gamma_{\hat{n}}(x, y)$. In this case, the method will successfully suppress any sidelobes as well as GLs and/or mirrors observed across the SAR images. However, applying the method to the SAR images requires more time to observe the effect of suppression as the acquisition and processing time for one SAR image is higher than for one snapshot.

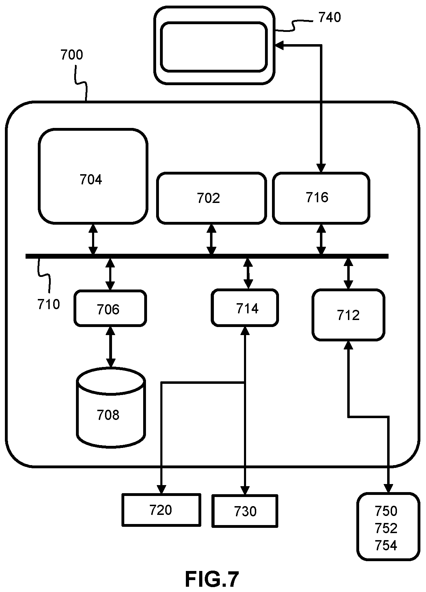

The method for suppressing sidelobes and ghost targets according to the present disclosure can be implemented as a standalone method or together with the method of reconstructing SAR images such as the Back-Projection reconstruction algorithm. Further, embodiments of the various processing steps as described above with reference to FIG.2 above can be performed by means of a computing system programmed to perform steps of the method. The computing system can for example comprise at least one processor and at least one memory. The at least one memory stores program code which comprises computer-executable instructions which together with the at least one processor cause the computing system to perform the various steps of the method. That is, the method can be entirely implemented as a computer-implemented method. An example of such computing system is shown in FIG.7. As shown in the figure, the computing system 700 may, in general, be formed as a suitable general-purpose computer and comprise a bus 710, a processor 702, a local memory 704, one or more optional input interfaces 714, one or more optional output interfaces 716, a communication interface 712, a storage element interface 706, and one or more storage elements 708. Bus 610 may comprise one or more conductors that permit communication among the components of the computing system 700. Processor 702 may include any type of conventional processor or microprocessor that interprets and executes programming instructions. Local memory 704 may include a random-access memory, RAM, or another type of dynamic storage device that stores information and instructions for execution by processor 702 and/or read-only memory, ROM, or another type of static storage device that stores static information and instructions for use by processor 702. Input interface 714 may comprise one or more conventional mechanisms that permit an operator or user to input information to the computing device 700, such as a keyboard 720, a mouse 730, a pen, voice recognition and/or biometric mechanisms, a camera, etc. Output interface 716 may comprise one or more conventional mechanisms that output information to the operator or user, such as a display 740, etc. Communication interface 712 may comprise any transceiver-like mechanism such as for example one or more Ethernet interfaces that enables computing system 700 to communicate with other devices and/or systems, for example with other computing devices 750, 752, 754. The communication interface 712 of computing system 700 may be connected to such another computing system by means of a local area network, LAN, or a wide area network, WAN, such as for example the internet. Storage element interface 706 may comprise a storage interface such as for example a Serial Advanced Technology Attachment, SATA, interface or a Small Computer System Interface, SCSI, for connecting bus 710 to one or more storage elements 708, such as one or more local disks, for example, SATA disk drives, and control the reading and writing of data to and/or from these storage elements 708. Although the storage element(s) 708 above is/are described as a local disk, in general, any other suitable computer-readable media such as a removable magnetic disk, optical storage media such as a CD or DVD, -ROM disk, solid-state drives, flash memory cards, ... could be used.

As used in this application, the term "circuitry" may refer to one or more or all of the following:

(a) hardware-only circuit implementations such as implementations in only analog and/or digital circuitry and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software, e.g., firmware, for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A computer implemented method (110) comprising:

   - obtaining (111), from a synthetic aperture radar, SAR, for imaging a region of interest within a field of view of the radar, at least two radar images, $\gamma_{\hat{n}}(x, y)$, of the region of interest acquired along a radar's trajectory, the radar images comprising range information and cross-range information;
   - deriving (113), from the respective radar images, weight maps, $W_{\hat{n}}(x, y)$, by multiplying the range information normalized with respect to the cross-range information and the cross-range information normalized with respect to the range information; and
   - combining (114) the radar images, $\gamma_{\hat{n}}(x, y)$, by taking into account the derived weight maps, $W_{\hat{n}}(x, y)$, thereby obtaining a compensated radar image of the region of interest, $\tilde{\gamma}(x, y)$.

2. The computer implemented method according to claim 1, wherein the step of combining (114) further comprises taking into account a prior knowledge characterizing the region of interest, wherein the prior knowledge comprises visual and/or non-visual information of the region of interest.

3. The computer implemented method according to claim 1, wherein the range and cross-range information of the respective radar images are forming range-cross-range maps and wherein the step of deriving comprises, for a respective range-cross-range map:

   - calculating ($203_1$) a first normalized range-cross-range map, $\gamma_{\hat{n}}^{norm}(:, y)$, by normalizing the range values of the range-cross-range map across the cross-range direction;
   - calculating ($203_2$) a second normalized range-cross-range map, $\gamma_{\hat{n}}^{norm}(x, :)$ by normalizing the cross-range values of the range-cross-range map across the range direction; and
   - multiplying ($204_2$) the first and second normalized range-cross-range maps to obtain a weight map for the respective range-cross-range map.

4. The computer implemented method according to any one of claims 1 to 3, wherein combining (114) comprises summing (106) the radar images to obtain a combined radar image, $\gamma(x,y)$, multiplying ($204_1$) the weight maps for the respective radar images, $W_{\hat{n}}(x, y)$, to obtain a resulting weight map, $\bar{W}(x, y)$, and applying (209) the resulting weight map to the combined radar image, $\gamma(x, y)$, to obtain the compensated radar image of the region of interest, $\tilde{\gamma}(x, y)$.

5. The computer implemented method according to claim 4, wherein the step of deriving (112) is performed iteratively, wherein at each iteration, $\hat{n}$, the derived weight map, $W_{\hat{n}}(x, y)$, is multiplied with a weight map derived at a preceding iteration, $W_{\hat{n}-1}(x,$

*y)*, and wherein the weight map derived at the first iteration is weighted with the prior knowledge.

6. The computer implemented method according to any one of claims 1 to 3, wherein combining (114) comprises weighting ($204_3$) the radar images, $\gamma_{\hat{n}}(x, y)$, with the respective weight maps, $W_{\hat{n}}(x, y)$, to obtain weighted radar images and combining (210) the weighted radar images to obtain the compensated radar image, $\tilde{\gamma}(x, y)$, of the region of interest.

7. The computer implemented method according to claim 6, wherein the step of deriving (112) and the step of combining (114) are performed iteratively, wherein at each iteration, $\hat{n}$, the derived weighted radar image, $\tilde{\gamma}_{\hat{n}}(x, y)$, is combined with the weighted radar image obtained at a preceding iteration, $\tilde{\gamma}_{\hat{n}-1}(x, y)$, and wherein the weighted radar image derived at the first iteration is weighted with the prior knowledge.

8. The computer implemented method according to any one of the preceding claims, wherein the steps of multiplying ($204_1$, $204_2$), the step of weighting (204s), and the step of applying (209) are element-wise operations.

9. The computer implemented method according to any one of the preceding claims, further comprises obtaining (112) rotated copies of the respective radar images, $\dot{\gamma}_{\hat{n}}(x, y)$, and, wherein the step of deriving (113) further comprises deriving weight maps for the respective rotated radar images, $\dot{W}_{\hat{n}}(\dot{x}, \dot{y})$, and the step of combining (114) to obtain the compensated radar image of the region of interest, $\tilde{\gamma}(x, y)$, further comprises taking into account the weight maps for the respective rotated radar images, $\dot{W}_{\hat{n}}(\dot{x}, \dot{y})$.

10. The computer implemented method according to any of the preceding claims, wherein the radar images are time-domain or frequency-domain reconstructed radar images or time-domain or frequency-domain reconstructed SAR images.

11. The computer implemented method according to any of the preceding claims, wherein the radar images are two-dimensional or three-dimensional images, wherein a two-dimensional radar image comprises range and an azimuth or an elevation cross-range information, and wherein the three-dimensional radar image comprises a range and an azimuth and an elevation cross-range information.

12. A SAR imaging system programmed for carrying out the method according to any one of claims 1 to 8.

13. The SAR imaging system according to claim 9, wherein the imaging system comprises at least one processor and at least one memory including computer program code, the at least one memory and computer program code configured to, with the at least one processor, cause the performing of the SAR imaging system.

14. A computer program product comprising computer-executable instructions for causing the SAR imaging system or a computer to perform the method according to any one of claims 1 to 8.

15. A computer readable storage medium comprising computer-executable instructions for performing the method according to any one of claims 1 to 8 when the program is run on a SAR imaging system or a computer.

**FIG.1A**

**FIG.1B**

EP 4 556 954 A1

**FIG.1C**

$y(a, b, n, k)$

$100 \rightarrow$

LPF
**101**
$\leftarrow$ *decimation factor*

Decimation
**102**

$y(a, b, \hat{n}, k)$

IFFT
**103**

Interpolation
**104**

Phase correction
**105**

$\gamma_{\hat{n}}(x, y)$

$\sum_{\hat{n}=1}^{\widehat{N}} \gamma_{\hat{n}}(x, y)$
**106**

$\gamma(x, y)$

SL & Ghosts suppression
**110**

$\tilde{\gamma}(x, y)$

**FIG.2A**

110

Obtaining radar images, $\gamma_{\hat{n}}(x, y)$, comprising range and cross-range information
**111**

Rotating the radar images to obtain rotated copies of the radar images, $\dot{\gamma}_{\hat{n}}(\dot{x}, \dot{y})$
**112**

Deriving, for the obtained radar images, weight maps, $W_{\hat{n}}(x, y), \dot{W}_{\hat{n}}(\dot{x}, \dot{y})$, by normalizing their range information with respect to the cross-range information and vice versa
**113**

Combining the radar images, where the combining takes into account the derived weight maps, to obtain a compensated radar image, $\tilde{\gamma}(x, y)$
**114**

**FIG.2B**

**FIG.2C**

**FIG.2D**

EP 4 556 954 A1

**FIG.3A**

| x \ y | 1 | 2 | 3 | 4 | 5 | 6 | 7 | 8 |
|---|---|---|---|---|---|---|---|---|
| 8 | 0 | 0 | 0 | 0 | 0 | 0 | 0 | 0.1 |
| 7 | 0 | 0 | 0 | 0 | 0 | 0 | 65 | 0 |
| 6 | 0 | 0 | 0 | 0 | 0 | 0 | 0 | 0.1 |
| 5 | 0 | 0 | 0 | 0 | 0 | 0 | 0 | 0.1 |
| 4 | 0 | 0 | 0 | 15 | 0 | 0 | 0 | 0 |
| 3 | 0 | 0 | 0 | 45 | 0 | 0 | 0 | 0 |
| 2 | 5 | 20 | 40 | 70 | 40 | 20 | 5 | 0 |
| 1 | 0 | 0 | 0 | 45 | 0 | 0 | 0 | 0 |

**FIG.3B**

| x \ y | 1 | 2 | 3 | 4 | 5 | 6 | 7 | 8 |
|---|---|---|---|---|---|---|---|---|
| 8 | 0 | 0 | 0 | 0 | 0 | 0 | 0 | 1 |
| 7 | 0 | 0 | 0 | 0 | 0 | 0.9 | 0 | 0 |
| 6 | 0 | 0 | 0 | 0 | 0 | 0 | 0 | 1 |
| 5 | 0 | 0 | 0 | 0 | 0 | 0 | 0 | 1 |
| 4 | 0 | 0 | 0 | 0.2 | 0 | 0 | 0 | 0 |
| 3 | 0 | 0 | 0 | 0.6 | 0 | 0 | 0 | 0 |
| 2 | 0 | 1 | 1 | 1 | 1 | 1 | 1 | 0 |
| 1 | 0 | 0 | 0 | 0.6 | 0 | 0 | 0 | 0 |

**FIG.3C**

| x \ y | 1 | 2 | 3 | 4 | 5 | 6 | 7 | 8 |
|---|---|---|---|---|---|---|---|---|
| 8 | 0 | 0 | 0 | 0 | 0 | 0 | 0 | 0 |
| 7 | 0 | 0 | 0 | 0 | 0 | 0 | 1 | 0 |
| 6 | 0 | 0 | 0 | 0 | 0 | 0 | 0 | 0 |
| 5 | 0 | 0 | 0 | 0 | 0 | 0 | 0 | 1 |
| 4 | 0 | 0 | 0 | 1 | 0 | 0 | 0 | 0 |
| 3 | 0 | 0 | 0 | 1 | 0 | 0 | 0 | 0 |
| 2 | 0.1 | 0.3 | 0.6 | 1 | 0.6 | 0.3 | 0.1 | 0 |
| 1 | 0 | 0 | 0 | 1 | 0 | 0 | 0 | 1 |

**FIG.3D**

| x \ y | 1 | 2 | 3 | 4 | 5 | 6 | 7 | 8 |
|---|---|---|---|---|---|---|---|---|
| 8 | 0 | 0 | 0 | 0 | 0 | 0 | 0 | 1 |
| 7 | 0 | 0 | 0 | 0 | 0 | 0.9 | 0 | 0 |
| 6 | 0 | 0 | 0 | 0 | 0 | 0 | 0 | 1 |
| 5 | 0 | 0 | 0 | 0 | 0 | 0 | 0 | 1 |
| 4 | 0 | 0 | 0 | 0.2 | 0 | 0 | 0 | 0 |
| 3 | 0 | 0 | 0 | 0.6 | 0 | 0 | 0 | 0 |
| 2 | 0.1 | 0.3 | 0.6 | 1 | 0.6 | 0.3 | 0.1 | 0 |
| 1 | 0 | 0 | 0 | 0.6 | 0 | 0 | 0 | 0 |

**FIG.4A**

| x \ y | 8 | 7 | 6 | 5 | 4 | 3 | 2 | 1 |
|---|---|---|---|---|---|---|---|---|
| 8 | 0 | 0 | 0 | 0 | 0 | 0 | 0 | 0.1 |
| 7 | 0 | 0 | 0 | 0 | 0 | 0 | 0 | 0.1 |
| 6 | 0 | 0 | 0 | 65 | 0 | 0 | 0 | 0 |
| 5 | 0 | 0 | 0 | 0 | 0 | 0 | 0 | 0.1 |
| 4 | 0 | 0 | 0 | 45 | 0 | 0 | 0 | 0 |
| 3 | 0 | 0 | 0 | 15 | 0 | 0 | 0 | 0 |
| 2 | 20 | 40 | 20 | 70 | 20 | 40 | 20 | 0 |
| 1 | 0 | 0 | 0 | 15 | 0 | 0 | 0 | 0 |

**FIG.4B**

| x \ y | 8 | 7 | 6 | 5 | 4 | 3 | 2 | 1 |
|---|---|---|---|---|---|---|---|---|
| 8 | 0 | 0 | 0 | 0 | 0 | 0 | 0 | 1 |
| 7 | 0 | 0 | 0 | 0 | 0 | 0 | 0 | 1 |
| 6 | 0 | 0 | 0 | 0.9 | 0 | 0 | 0 | 0 |
| 5 | 0 | 0 | 0 | 0 | 0 | 0 | 0 | 1 |
| 4 | 0 | 0 | 0 | 0.6 | 0 | 0 | 0 | 0 |
| 3 | 0 | 0 | 0 | 0.2 | 0 | 0 | 0 | 0 |
| 2 | 1 | 1 | 1 | 1 | 1 | 1 | 1 | 0 |
| 1 | 0 | 0 | 0 | 0.2 | 0 | 0 | 0 | 0 |

**FIG.4C**

| x \ y | 8 | 7 | 6 | 5 | 4 | 3 | 2 | 1 |
|---|---|---|---|---|---|---|---|---|
| 8 | 0 | 0 | 0 | 0 | 0 | 0 | 0 | 1 |
| 7 | 0 | 0 | 0 | 0 | 0 | 0 | 0 | 1 |
| 6 | 0 | 0 | 0 | 1 | 0 | 0 | 0 | 0 |
| 5 | 0 | 0 | 0 | 0 | 0 | 0 | 0 | 1 |
| 4 | 0 | 0 | 0 | 1 | 0 | 0 | 0 | 0 |
| 3 | 0 | 0 | 0 | 1 | 0 | 0 | 0 | 0 |
| 2 | 0.2 | 0.6 | 0.3 | 1 | 0.3 | 0.6 | 0.3 | 0 |
| 1 | 0 | 0 | 0 | 1 | 0 | 0 | 0 | 0 |

**FIG.4D**

| x \ y | 8 | 7 | 6 | 5 | 4 | 3 | 2 | 1 |
|---|---|---|---|---|---|---|---|---|
| 8 | 0 | 0 | 0 | 0 | 0 | 0 | 0 | 1 |
| 7 | 0 | 0 | 0 | 0 | 0 | 0 | 0 | 1 |
| 6 | 0 | 0 | 0 | 0.9 | 0 | 0 | 0 | 0 |
| 5 | 0 | 0 | 0 | 0 | 0 | 0 | 0 | 1 |
| 4 | 0 | 0 | 0 | 0.6 | 0 | 0 | 0 | 0 |
| 3 | 0 | 0 | 0 | 0.2 | 0 | 0 | 0 | 0 |
| 2 | 0.2 | 0.6 | 0.3 | 1 | 0.3 | 0.6 | 0.3 | 0 |
| 1 | 0 | 0 | 0 | 0.2 | 0 | 0 | 0 | 0 |

**FIG.4E**

| x \ y | 8 | 7 | 6 | 5 | 4 | 3 | 2 | 1 |
|---|---|---|---|---|---|---|---|---|
| 8 | 0 | 0 | 0 | 0 | 0 | 0 | 0 | 1 |
| 7 | 0 | 0 | 0 | 0 | 0 | 0 | 0 | 0 |
| 6 | 0 | 0 | 0 | 0 | 0 | 0 | 0 | 0 |
| 5 | 0 | 0 | 0 | 0 | 0 | 0 | 0 | 1 |
| 4 | 0 | 0 | 0 | 0.1 | 0 | 0 | 0 | 0 |
| 3 | 0 | 0 | 0 | 0.1 | 0 | 0 | 0 | 0 |
| 2 | 0 | 0.2 | 0.2 | 1 | 0.2 | 0.2 | 0 | 0 |
| 1 | 0 | 0 | 0 | 0.1 | 0 | 0 | 0 | 0 |

**FIG.5A**

| x \ y | 1 | 2 | 3 | 4 | 5 | 6 | 7 | 8 |
|---|---|---|---|---|---|---|---|---|
| 8 | 0 | 40 | 0 | 0 | 0 | 0 | 0 | 0 |
| 7 | 0 | 20 | 0 | 0 | 0 | 0 | 0 | 0 |
| 6 | 0 | 10 | 0 | 0 | 0 | 0 | 0 | 0 |
| 5 | 10 | 70 | 5 | 25 | 35 | 15 | 0 | 0 |
| 4 | 0 | 10 | 0 | 0 | 0 | 0 | 65 | 0 |
| 3 | 0 | 30 | 0 | 0 | 0 | 0 | 0 | 0 |
| 2 | 0 | 40 | 0 | 0 | 0 | 0 | 0 | 0 |
| 1 | 0 | 0 | 0 | 0 | 0 | 0 | 0 | 0.1 |

**FIG.5B**

| x \ y | 1 | 2 | 3 | 4 | 5 | 6 | 7 | 8 |
|---|---|---|---|---|---|---|---|---|
| 8 | 0 | 1 | 0 | 0 | 0 | 0 | 0 | 0 |
| 7 | 0 | 1 | 0 | 0 | 0 | 0 | 0 | 0 |
| 6 | 0 | 1 | 0 | 0 | 0 | 0 | 0 | 0 |
| 5 | 0.1 | 1 | 0 | 0.3 | 0.5 | 0.2 | 0 | 0 |
| 4 | 0 | 0 | 0 | 0 | 0 | 0 | 1 | 0 |
| 3 | 0 | 1 | 0 | 0 | 0 | 0 | 0 | 0 |
| 2 | 0 | 1 | 0 | 0 | 0 | 0 | 0 | 0 |
| 1 | 0 | 0 | 0 | 0 | 0 | 0 | 0 | 1 |

**FIG.5C**

| x \ y | 1 | 2 | 3 | 4 | 5 | 6 | 7 | 8 |
|---|---|---|---|---|---|---|---|---|
| 8 | 0 | 0.6 | 0 | 0 | 0 | 0 | 0 | 0 |
| 7 | 0 | 0.3 | 0 | 0 | 0 | 0 | 0 | 0 |
| 6 | 0 | 0.1 | 0 | 0 | 0 | 0 | 0 | 0 |
| 5 | 1 | 1 | 1 | 1 | 1 | 1 | 0 | 0 |
| 4 | 0 | 0.1 | 0 | 0 | 0 | 0 | 1 | 0 |
| 3 | 0 | 0.4 | 0 | 0 | 0 | 0 | 0 | 0 |
| 2 | 0 | 0.6 | 0 | 0 | 0 | 0 | 0 | 0 |
| 1 | 0 | 0 | 0 | 0 | 0 | 0 | 0 | 1 |

**FIG.5D**

| x \ y | 1 | 2 | 3 | 4 | 5 | 6 | 7 | 8 |
|---|---|---|---|---|---|---|---|---|
| 8 | 0 | 0.6 | 0 | 0 | 0 | 0 | 0 | 0 |
| 7 | 0 | 0.3 | 0 | 0 | 0 | 0 | 0 | 0 |
| 6 | 0 | 0.1 | 0 | 0 | 0 | 0 | 0 | 0 |
| 5 | 0.1 | 1 | 0 | 0.3 | 0.5 | 0.2 | 0 | 0 |
| 4 | 0 | 0 | 0 | 0 | 0 | 0 | 1 | 0 |
| 3 | 0 | 1 | 0 | 0 | 0 | 0 | 0 | 0 |
| 2 | 0 | 1 | 0 | 0 | 0 | 0 | 0 | 0 |
| 1 | 0 | 0 | 0 | 0 | 0 | 0 | 0 | 1 |

**FIG.5E**

| x \ y | 1 | 2 | 3 | 4 | 5 | 6 | 7 | 8 |
|---|---|---|---|---|---|---|---|---|
| 8 | 0 | 0 | 0 | 0 | 0 | 0 | 0 | 0 |
| 7 | 0 | 0 | 0 | 0 | 0 | 0 | 0 | 0 |
| 6 | 0 | 0 | 0 | 0 | 0 | 0 | 0 | 0 |
| 5 | 0 | 1 | 0 | 0 | 0 | 0 | 0 | 0 |
| 4 | 0 | 0 | 0 | 0 | 0 | 0 | 0 | 0 |
| 3 | 0 | 0.2 | 0 | 0 | 0 | 0 | 0 | 0 |
| 2 | 0 | 0 | 0 | 0 | 0 | 0 | 0 | 0 |
| 1 | 0 | 0 | 0 | 0 | 0 | 0 | 0 | 1 |

**FIG.5F**

| x \ y | 1 | 2 | 3 | 4 | 5 | 6 | 7 | 8 |
|---|---|---|---|---|---|---|---|---|
| 8 | 0 | 0 | 0 | 0 | 0 | 0 | 0 | 0 |
| 7 | 0 | 0 | 0 | 0 | 0 | 0 | 0 | 0 |
| 6 | 0 | 0 | 0 | 0 | 0 | 0 | 0 | 0 |
| 5 | 0 | 1 | 0 | 0 | 0 | 0 | 0 | 0 |
| 4 | 0 | 0 | 0 | 0 | 0 | 0 | 0 | 0 |
| 3 | 0 | 0 | 0 | 0 | 0 | 0 | 0 | 0 |
| 2 | 0 | 0 | 0 | 0 | 0 | 0 | 0 | 0 |
| 1 | 0 | 0 | 0 | 0 | 0 | 0 | 0 | 0.1 |

FIG.6A

**FIG.6B**

EP 4 556 954 A1

FIG.6C

**FIG.6D**

**FIG.6E**

**FIG.6F**

**FIG.7**

EP 4 556 954 A1

Europäisches
Patentamt

European
Patent Office

Office européen
des brevets

# EUROPEAN SEARCH REPORT

**Application Number**

**EP 23 20 9610**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 015 933 A (PEOPLE'S LIBERATION ARMY NATIONAL UNIVERSITY OF DEFENSE TECHNOLOGY) 6 September 2022 (2022-09-06) * the whole document * ----- | 1-15 | INV. G01S13/90 |
| A | LU JINGYUE ET AL: "Parametric Azimuth-Variant Motion Compensation for Forward-Looking Multichannel SAR Imagery", IEEE TRANSACTIONS ON GEOSCIENCE AND REMOTE SENSING, IEEE, USA, vol. 59, no. 10, 14 January 2021 (2021-01-14), pages 8521-8537, XP011879756, ISSN: 0196-2892, DOI: 10.1109/TGRS.2020.3047449 [retrieved on 2021-09-23] * the whole document * ----- | 1-15 | |
| A | LU JINGYUE ET AL: "Resolution Enhancement for Forwarding Looking Multi-Channel SAR Imagery With Exploiting Space-Time Sparsity", IEEE TRANSACTIONS ON GEOSCIENCE AND REMOTE SENSING, IEEE, USA, vol. 61, 26 December 2022 (2022-12-26), pages 1-17, XP011931733, ISSN: 0196-2892, DOI: 10.1109/TGRS.2022.3232392 [retrieved on 2022-12-26] * the whole document * ----- -/-- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 18 March 2024 | Rudolf, Hans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LU JINGYUE ET AL: "High-Resolution Forward-Looking Multichannel SAR Imagery With Array Deviation Angle Calibration", IEEE TRANSACTIONS ON GEOSCIENCE AND REMOTE SENSING, IEEE, USA, vol. 58, no. 10, 1 October 2020 (2020-10-01), pages 6914-6928, XP011811156, ISSN: 0196-2892, DOI: 10.1109/TGRS.2020.2977731 [retrieved on 2020-09-24] * the whole document * | 1-15 | |
| A | HE FANGXIN ET AL: "Analysis of Left-right Ambiguity in Multichannel Radar Forward-looking Imaging", 2021 CIE INTERNATIONAL CONFERENCE ON RADAR (RADAR), IEEE, 15 December 2021 (2021-12-15), pages 251-254, XP034287096, DOI: 10.1109/RADAR53847.2021.10027885 [retrieved on 2023-02-08] * the whole document * | 1-15 | **TECHNICAL FIELDS SEARCHED (IPC)** |

The present search report has been drawn up for all claims

| Place of search | Date of completion of the search | Examiner |
|---|---|---|
| Munich | 18 March 2024 | Rudolf, Hans |

EPO FORM 1503 03.82 (P04C01)

## ANNEX TO THE EUROPEAN SEARCH REPORT
## ON EUROPEAN PATENT APPLICATION NO.

**EP 23 20 9610**

This annex lists the patent family members relating to the patent documents cited in the above-mentioned European search report.
The members are as contained in the European Patent Office EDP file on
The European Patent Office is in no way liable for these particulars which are merely given for the purpose of information.

**18-03-2024**

| Patent document cited in search report | Publication date | Patent family member(s) | Publication date |
|---|---|---|---|
| CN 115015933 A | 06-09-2022 | NONE | |

## EP 4 556 954 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ALBABA, ADNAN et al.** Forward-Looking MIMO-SAR for Enhanced Radar Imaging in Autonomous Mobile Robots.. *IEEE Access*, 2023

- **ALBABA, ADNAN et al.** Forward-Looking MIMO-SAR for Enhanced Radar Imaging in Autonomous Mobile Robots. *IEEE Access*, 2023